# EUROPEAN PATENT APPLICATION

(11) **EP 3 618 269 A1**
(43) Date of publication of application: **04.03.2020**
(21) Application number: 19189527.5
(22) Date of filing: 01.08.2019
(51) Int. Cl.: H02S 20/30

(54) **ELEVATION SYSTEM FOR PHOTOVOLTAIC MODULES**

(30) Priority: 30.08.2018 ES 201831322 U
(71) Applicant: Axial Sistemas Solares, S.L., 46980 Paterna (ES)
(72) Inventor:
(74) Representative: Dosterschill, Peter

(57) **Abstract**

The invention refers to an elevation system for photovoltaic modules (1). The elevation system according to the invention comprises a platform (PF) consisting of transverse elements (6), which has a back side (BS), and a front side (FS) whereby solar panels adjacent to each other, inclined towards the sun, and arranged in one or more rows are connected to the transverse elements (6) by means of support elements (5a, 5b), whereby the supporting elements (5a, 5b) are attached to at least one pillar (7) comprising actuating means, and at least one supporting and accompanying pillar. The platform (PF) has a support axis (EA-PF), whereby the at least two pillars each comprise a ball joint (11), which have a rotation axis (15) and the at least two pillars are connected to the back side (BS) of the platform (PF) at a distance below the platform support axis (EA-PF) and at a distance above the axis of rotation (15) of the ball joints (11).

## Description

### TECHNICAL FIELD OF THE INVENTION

The present invention falls within the technical field of photovoltaic solar installations or PV, and particularly in the so-called solar trackers or mobile structures that allow to modify the orientation of the solar capture surface in order to position the photovoltaic modules constituted by solar panels as perpendicular to the sun as possible throughout the day, within their range of motion, to compensate the effect of earth movement during daylight hours.

### BACKGROUND OF THE INVENTION

At present, solar trackers are classified according to their number of axes.

Each of them is associated with a degree of freedom, identifying the degrees of freedom or DOF as the number of independent movements that a machine can make either linearly or rotationally.

The movements of the solar trackers will always be of the rotational type in order to be able to place the solar capture surface equipped with photovoltaic modules in the most perpendicular way to the position of the sun, so that the greatest possible solar radiation can be captured. To this effect, the minimum number of degrees of freedom of movement or DOF required is two.

Hereunder, the different types of structures for the photovoltaic installations that exist are described, including solar trackers.

Fixed structures: This is the name given to photovoltaic solar installations whose solar panels remain in the same position over time.

Mobile structures of one axis: This is the name of solar trackers or installations composed of a structure with a fixed part and a mobile part that has means to modify the orientation of the solar captation surface that only has one degree of freedom of movement or 1DOF.

There are three types of solar trackers of one axis: Polar, azimuthal, and horizontal.

Solar trackers with a polar axis have an axis oriented to the south and are inclined at an angle equal to the latitude. The rotation is adjusted so that the normal to the surface coincides with the terrestrial meridian that contains the sun.

The azimuthal axis solar trackers have a vertical axis, the angle of the surface is constant and equal to the latitude, and the rotation is adjusted so that the normal to the surface coincides with the local meridian that contains the sun.

The horizontal axis solar trackers have a horizontal axis and are oriented in a north-south direction. The rotation is adjusted so that the normal to the surface coincides with the terrestrial meridian that contains the sun.

The rotational speed of solar trackers of a polar axis is constant of 15 degrees per hour, while those of an azimuth axis have a variable speed.

In terms of solar radiation capture, the azimuth tracking structures are generally around average values of 7% less radiation than the tracking on two axes, and 4% less than the tracking of a polar axis, but they can reach radiations up to 25% higher compared to fixed structures.

Two-axis mobile structures: Solar trackers or installations composed of a structure with a fixed part and a mobile part that has means to modify the orientation of the solar capture surface with two degrees of freedom of movement or 2DOF, and are able to make a more precise solar tracking.

This type of solar trackers can always be positioned perpendicular to the position of the sun, thus maximizing the capture of solar radiation and, as a result, the generation of electricity.

To orient them, a follow-up must be carried out in both direction and elevation, which implies having two actuators, to vary the inclination of the panel horizontally and vertically.

They can be single-post or carousel type depending on whether they have one or more supports distributed along the surface.

These installations reach the maximum performance values in solar radiation capture, in values between 36% and 41% efficiency (from 30% to 45% more than fixed structures). However, they represent a considerably higher investment in cost and maintenance, so when choosing the type of structure for the photovoltaic solar installation, it is necessary to conduct a study influenced by various parameters.

Some of the most characteristic parameters that allow us to decide which types of follow-ups are preferable for the project needs are the increase in energy production, the cost of the equipment and its installation, wind resistance, availability and cost and simplicity. or complexity of maintenance.

Tracking can be done by different methods:
Tracking by solar clock, which is subject to the unit of time of 24 hours, varying its position with respect to the cycle of this unit, with an effective tracking of 12 hours, without considering changes of sudden weather conditions because it is not associated with a preliminary climate study.

Tracking by sensors, which allows the detection or measurement that is missing in the correct angle between the solar radiation and the surface of the solar panel, which must be 90 degrees for better capture.

Tracking by calculated coordinates, which follows the path of the sun between each position by calculating its astronomical coordinates. This method does not require the presence of radiation, coordinate systems are immune to cloudy days and other types of circumstances that may produce errors, such as the flashes.

### DESCRIPTION OF THE INVENTION

For the purposes of terminology used in this description, the reference to a photovoltaic module or module should be interpreted as that formed by the union of several solar panels according to the power required for the installation, which are mounted on a structure of support or frame.

The solar panel is formed by a set of solar cells, electrically connected and encapsulated, which constitute the generator of the installation.

When the power to be generated is high, it is necessary to group and connect a set of solar panels together forming a series of modules, which are mounted on a variety of possible structures as explained in the preceding section.

The reference to single row systems does not mean that the photovoltaic solar installation based on these systems cannot be configured with a multitude of rows of photovoltaic modules, but that they are systems whose movement and orientation can be carried out with at least a single row of photovoltaic modules, while other systems, which will be referred to as multi row, necessarily need to install more than one row of photovoltaic modules because of the orientation system they use.

It is called single row because each drive moves a single row. Consequently, a PV park or Photovoltaic Solar Installation (PSI) composed of only one tracker would be possible. However, in practice they are always PV parks with multiple rows of trackers, while still being a park composed of single-row trackers. Therefore single-row or multi-row does not refer to the number of trackers but to the number of trackers that each drive manages on its own.

In multi row systems, a common disadvantage of the joint operation of several rows of the installation, lies in the existence of impediments that extend inferiorly with respect to the platform that supports the photovoltaic modules and which exceeds the depth of the rows, so that there are obstacles to access freely through the land between the rows.

The elevation system for photovoltaic modules object of the invention represents an advantageous and alternative evolution of optimization of the orientation systems of the single row photovoltaic modules with movement to one axis, through the development of a new articulation structure that enables the orientation of the solar panels of the photovoltaic module or modules by raising them.

The main differences of this single-row system are in the position of the axis of support and rotation of the photovoltaic modules with respect to the ball joint of the system, as well as the type of ball joint. According to the invention, the support axis instead of being centered on the axis of rotation of the ball joint as it is on systems with conventional axis movement (which make the support axis and rotation of the modules pass through the center of a large bearing), it is configured so that the center of the ball joint is separated from the said support axis of the solar panels, maintaining the latter and therefore the center of gravity, above the center of rotation of the ball joint, creating a distance between them that will generate a moment of strength.

At first, it might seem that this solution is detrimental to the stability of the structure, since its own weight produces an increasingly rotational torque as the modules of the tracker lose the horizontal towards the maximum tracking angle, where the torque required to mobilize its own weight is maximum.

In any solar tracker, the sizing of the engines must be carried out under the maximum wind load plus the resistance imposed by the conditions of each design. Therefore, it might be assumed that with the embodiment according to the invention it would be necessary to add the maximum wind load to the load produced by the eccentricity of the own weight of the tracker.

However, according to the invention, the angle at which this maximum wind load is produced is around 15 degrees, therefore, the necessary maximum torque is not affected, because the loads of the own weight and of wind compensate each other in each position.

This means that the maximum load by wind does not occur at the same time as the maximum by own weight. The sum of charges is balanced as the tracker rotates.

As a consequence and with the solution of the invention it is possible to use engines of less power than with conventional systems with movement to one axis, at the same time that an increase in solar radiation capture performance is achieved closer to the systems of movement to two axes but eliminating the disadvantages of higher installation cost, maintenance and complexity of the latter.

In addition, the ball joints present two degrees of freedom, allowing the movement of rotation of the axis, and with an inner capsule of spherical type that allows it to absorb an eventual inclination of the terrain in the North-South direction close to 10%.

On conventional trackers, the use of at least one plastic ball joint with no degree of freedom, or of small magnitude if there is one, produces accumulation of tensions and increase of friction due to the inaccuracies inherent to the foundation of the installation, and the use of a centered polymeric ball joint supposes increase of friction that demands higher torque than the increase produced by the eccentricity of the own weight at 15 degrees of the system object of the invention.

The use according to the invention of a metal ball joint with 2 degrees of freedom makes it possible to correct deformations due to imperfections during assembly, in addition to reducing friction due to the low coefficient of friction inherent to this type of bearings.

It has been demonstrated that the energy required to overcome the frictions due to assembly misalignments is greater than the increase in energy imposed by the eccentricity of the own weight, which again refers to the lower consumption and therefore the capacity of less powerful motors for the operation of the system object of the invention.

The system object of the invention has focused on the influence of the arrangement of the center of gravity of the grid or set of photovoltaic modules, solar panels, support structure or frame and its crossbeams with respect to the axis of rotation, and is based on to compensate the own weight with the loads of wind and not in the auto-compensation of the own weight.

One of the main objectives of the invention is the optimization of system consumption and it is at this point where the technological leap lies. The increase of the friction force inherent to the increase of the own weight that the extra pieces required on conventional multi-row systems is opposed to this premise.

The force transmission of said conventional multi-row systems is based on the vectorial decomposition of the force exerted by the transmission bars to each of the arms, with the force tangent to the arm being used to produce the tracking, and adding (or subtracting depending on the direction) the axial component to the arm at normal force to the contact surface, further increasing the friction and decreasing the efficiency.

The main disadvantages of conventional multi-row and/or two-axis movement systems, as well as those based on hydraulic systems and that the present invention avoids and overcomes can be summarized in the following.

CLEANING: In systems based on hydraulic actuators, the handling of oils, appliances and pipes, as the place of the location must be kept in extreme cleaning conditions as it is highly sensible to clogging. In those based on electric actuators, frequent cleaning and greasing is required to prevent dirt accumulated in the piston from entering the cylinder and blocking the gears.

HIGH PRESSURE: Systems based on hydraulic actuators are systems that need highly specialized personnel, due to the existence of high-pressure components that can be dangerous.

COST: Pumps, motors, electric linear actuators, conventional motor-reducers, proportional valves and servo-valves are expensive.

ACTUATOR MAINTENANCE: In systems based on hydraulic actuators both oils and cylinder retainers and valves have a life much shorter than the useful life that is usually given for parks, so the maintenance costs will be very high when you need to replace components each few years.

PARK MAINTENANCE: The solar parks are kept in continuous cleaning to maintain the efficiency of the modules, for that purpose it is usually used machinery to which a tool that performs this function is adapted. Multi row systems impede the passage of machinery because the transmission bars are a physical barrier.

CONSUMPTION: The consumption of conventional multi-row and/or two-axis movement systems is considerably higher.

Said disadvantages are eliminated with the system object of the invention by means of a elevation system for photovoltaic modules comprising a fixed part and a moving part, a platform consisting of transverse elements, which has a back side, and a front side where the solar panels of the photovoltaic module are connected to the transverse elements; solar panels adjacent to each other, inclined towards the sun, and arranged in one or several rows by means of support elements; wherein the support elements are connected to at least one pillar comprising drive means for actuating (moving) the system; comprising an inner capsule, and wherein at least said pillar is anchored in a base area or floor of the elevation system, at least one means for moving the platform in the direction of the sun is connected to the rear part of the platform, where the platform has a support axis, the pillar comprises a ball joint, and the pillar is connected to the back side of the platform at a distance below the support axis of the platform.

In the elevation system object of the invention, the support axis of the platform is a distance above the axis of rotation of the ball joint, and from a side view of the installation the support axis of the platform is only vertically aligned with the pillar and with the axis of rotation of the ball joint when the platform is at 90 degrees from the pillar.

Likewise, in lateral view of the installation, the support axis of the platform is laterally offset with respect to the vertical line of the pillar and the axis of rotation of the ball joint when the platform is not at 90 degrees from the pillar.

The elevation system object of the invention comprises at least one pillar incorporating actuation means for driving the system, at least one pillar of support and accompanying (which does not incorporate drive means for moving but only passive accompanying the elevation movements of the system), and at least one mast connecting the transverse support elements of the platform, with the ball joints, the connection between said mast and the respective pillars being configured eccentrically with respect to the axis of rotation of the ball joints of said pillars. This can be materialized by means for connection of the mast with the ball joints that originate a separation or distance between the mast and the axis of rotation of the ball joints, such as an element of support, connection and separation between the mast and the ball joint, thus connecting the pillar and the mast at different points, and/or such as a plate connected to the mast itself, or a shape of the mast for that purpose as a bend or a curvature of the mast to that effect.

Also, this elevation system has the feature that it has no fixed or moving elements below the platform that extend horizontally to a greater extent than the platform itself, so that except the at least one pillar there are no impediments to free access over the ground below the platform, neither there are any impediments to free passage over the ground between different rows or adjacent lines of installations of the same solar park.

On the other hand, it is a feature of the system that the support axis of the platform is positioned at different heights with respect to the ground in each and every orientation degree of the solar panels within the range of motion of the system, except in the two opposite extreme positions.

The system also comprises an electronic control device controlled by a computer program, an anemometer and a GPS receiver, where the electronic control device is connected with at least one sensor that identifies the angle between the solar radiation and the photovoltaic modules, and where the computer program is configured so that the movement of the elevation system is based on data relating to the path of the sun.

The system comprises an engine commanded by a tracking control unit or TCU (for Track Control Unit). Each TCU can position the modules automatically and independently and is in constant communication with a network control unit or NCU (for Network Control Unit) and with the rest of the TCU's associated with that same NCU. In this way, an NCU, in addition to collecting information on the status of a set of TCU's, can configure its work parameters, send it to specific positions (defense, cleaning, etc.) or allow work in manual mode.

The network is completed with the remote sensor units or RSU (for Remote Sensor Unit). In this logic unit the alarm parameters are programmed, in addition this unit is in charge of receiving the signals of the different sensors (wind, snow, etc.). When an alarm event is detected by the sensors, the RSU identifies it and sends the information to one or several NCUs that indicates to its set of TCUs the positions to be adopted.

### BRIEF DESCRIPTION OF THE FIGURES

To complement the description and in order to contribute to a better understanding of the essential characteristics of the invention, schematic plans in which illustrative and non-limiting aspects and embodiments of the invention are attached to the present description as an integral part thereof.

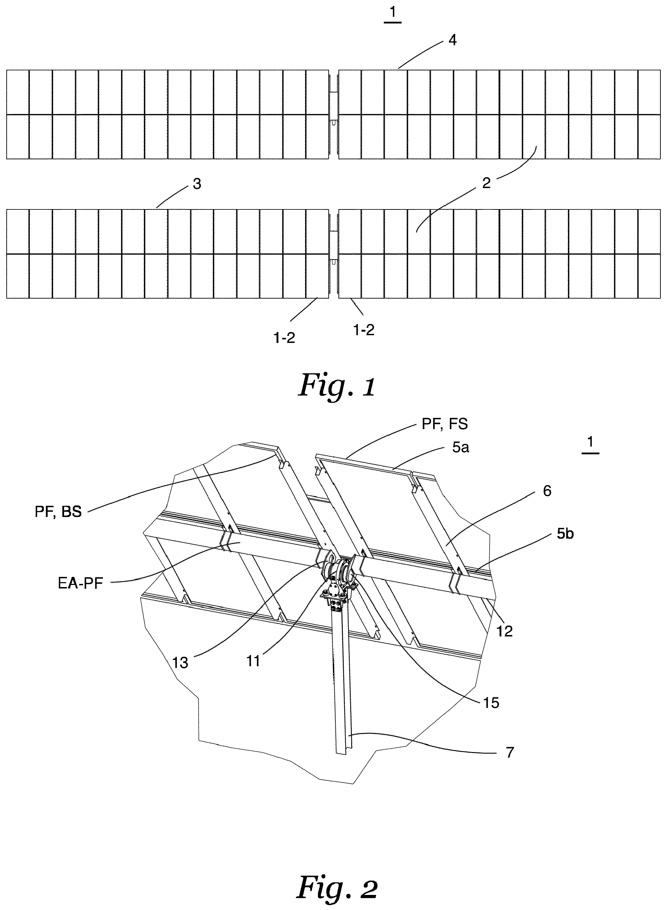

Figure 1 is a general top view of a photovoltaic solar installation according to a possible embodiment of the elevation system object of the invention.
Figure 2 is a perspective view of a detail of the elevation system.

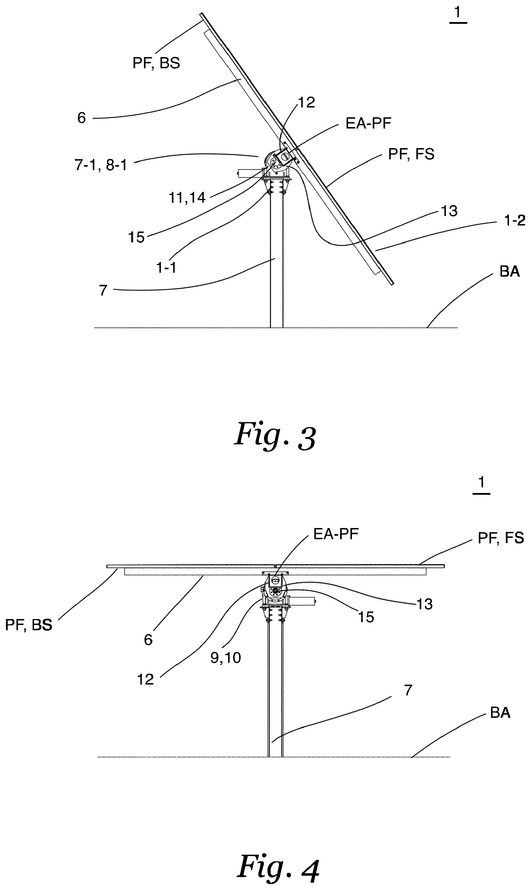

Figure 3 is a side view of the system, in which the platform is in a lateral position.
Figure 4 is a side view of the system, in which the platform is in a position of 90 degrees with respect to the pillar.

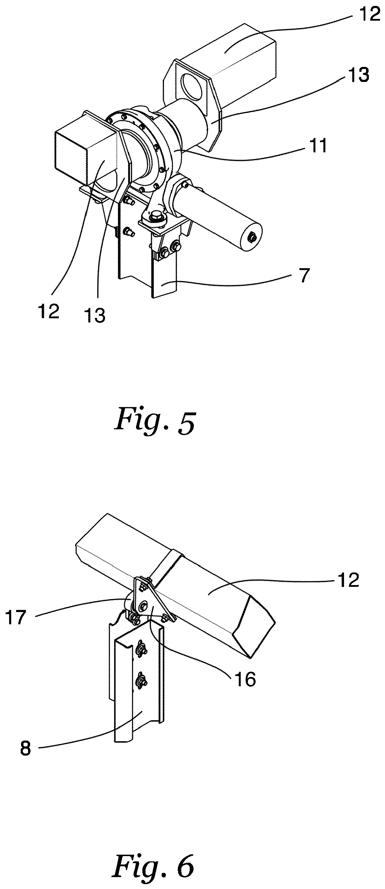

Figure 5 is a perspective view of a detail of a pillar incorporating drive means.
Figure 6 is a perspective view of a detail of a support and accompanying pillar.

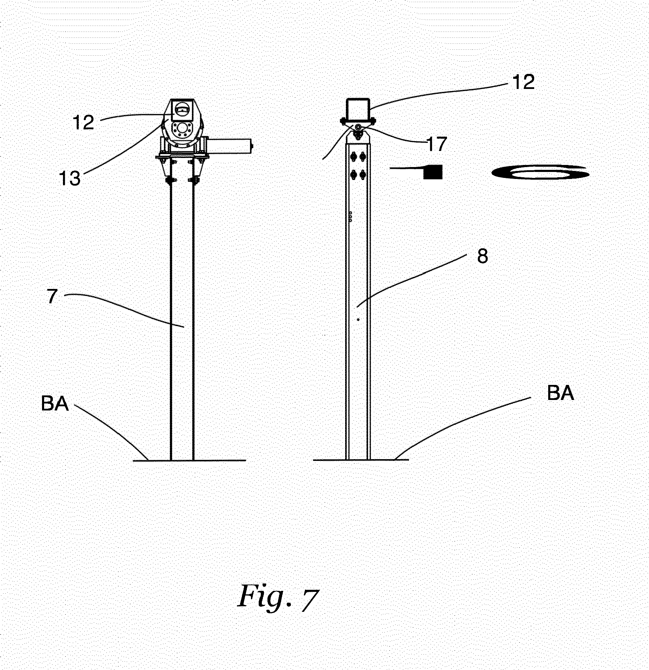

Figure 7 are two independent views, from a side view, of a detail of each of the pillars of Figures 5 and 6.

In these figures references appear that identify the following elements:
- 1: Elevation system
- 1-1: fixed part of the system
- 1-2: mobile part of the system
- 2: solar panels
- 3, 4: rows of solar panels
- 5a, 5b: support elements
- 6: transverse elements
- 7: drive pillar
- 8: support and accompanying pillar
- 7-1, 8-1: inner pillar capsule
- 9: electronic control device
- 10: sensor
- 11: ball joint of the drive pillar
- 12: mast
- 13: plate
- 14: means to move the platform
- 15: rotating shaft of the ball joint
- 16: mast support element
- 17: ball joint of the support and accompanying pillar

- BA: base area
- PF: platform
- FS: front side of the platform
- BS: back side of the platform
- EA-PF: support axis of the platform

### PREFERRED EMBODIMENT OF THE INVENTION

In view of the aforementioned figures, and in accordance with the identification references adopted therein, a non-limiting example of the proposed elevation system can be observed, which comprises the parts and elements that are indicated and described in detail below.

The elevation system 1 object of the invention according to a preferred and not limitative embodiment, has a structure comprising a fixed part 1-1 and a moving part 1-2, and a platform PF consisting of transverse elements 6, which has a support axis EA-PF on a mast 12, a back side BS connected to at least one means 14 for moving the PF platform in the direction of the sun, and a front side FS where the solar panels 2 adjacent to each other that integrate the photovoltaic modules, inclined towards the sun, and arranged in one or more rows 3,4 by means of support elements 5a, 5b are connected to said transverse elements 6, all of which are connected to at least one pillar 7 comprising actuating means for driving the system, at least one support and accompanying pillar 8, anchored in a base area BA, said pillars 7, 8 comprise a ball joint 11, 17 having an axis of rotation 15, with the main characteristic that said pillars 7,8 are connected to the back side of the platform PF at a distance below said support axis of the platform EA-PF, said distance being above the axis of rotation 15 of the ball joint 11.

The connection between the mast 12 and the respective pillars 7, 8 is eccentric with respect to the axis of rotation of the ball joints 11, 17 of the aforementioned pillars 7, 8. This can be realized respectively from joining means of the mast 12 with the ball joints 11, 17 which produce a separation or distance between the center of the mast and the axis of rotation 15 of the ball joints 11, 17, such as a support element 16 of connection and separation between the mast 12 and the ball joint 17 thereby connecting the pillar and the mast on different points, and/or such as a plate 13 attached to the mast 12 itself, or a shape of the mast suitable for said purpose as a bend or curvature thereof to that effect.

From a side view of the elevation system 1 the bearing axis of the support axis EA-PF of the platform is vertically aligned with the pillars 7, 8 and with the axis of rotation 15 of the ball joint 11 only when the platform PF is at 90 degrees of the pillars 7, 8 and is laterally offset or displaced from the vertical line of the pillars 7, 8 and of the axis of rotation 15 of the ball joint 11 when the platform PF is in any position other than 90 degrees with respect to the pillars 7, 8.

According to the features of the system and the embodiment described, the support axis EA-PF of the platform PF is positioned at different heights with respect to the ground in each and every one of the degrees of orientation of the solar panels 2 within the range of movement of the system, except in the two opposite extreme positions.

The platform PF of the elevation system 1 from a side view is the component whose horizontal extension is the maximum with respect to any other components of the system that are below the line defined by the platform PF in any of its positions.

The at least one pillar 7, 8 can comprise an inner capsule 7-1, 8-1 for the assembly or anchoring of the ball joint 11.

The elevation system 1 comprises an electronic control device 9 controlled by a computer program, as well as it can incorporate an anemometer and a GPS receiver, connected with at least one sensor 10 that identifies the angle between the solar radiation and the solar panels 2, configured so that the movement of the elevation system 1 is based on data relating to the path described by the sun.

In summary, the invention covers, among other possible, the following embodiments.

An elevation system for photovoltaic modules 1 comprising a platform PF consisting of transverse elements 6, which has a back side BS, and a front side FS where the solar panels 2 are connected to the transverse elements 6; solar panels 2 adjacent to each other, inclined towards the sun, and arranged in one or more rows 3, 4 by means of support elements 5a, 5b; wherein the support elements 5a, 5b are attached to at least one pillar 7 comprising drive means, and to a support and accompanying pillar 8; where the pillars 7, 8 are anchored in a base area BA or floor of the elevation system 1; at least one means 14 for moving the platform PF in the direction of the sun is connected to the Back side BS of the platform PF, where the platform PF has a support axis EA-PF, where the at least two pillars 7, 8 comprise each a ball joint 11, 17 which have a rotation axis 15, and which is characterized in that the at least two pillars 7, 8 are connected to the back side BS of the platform PF at a distance below the support axis EA-PF of the platform.

In the elevation system 1 described above the support axis EA-PF of the platform PF is at a distance above the axis of rotation 15 of the ball joints 11, 17, and from a side view of the system the support axis of the EA-PF platform is vertically aligned with the at least two pillars 7, 8 and with the axis of rotation 15 of the ball joints 11, 17 only when the platform PF is 90 degrees from the at least two pillars 7, 8.

From a side view of the elevation system 1 the support axis EA-PF of the platform is laterally displaced with respect to the vertical line of at least two pillars 7, 8 and the axis of rotation 15 of the ball joints 11, 17 when the platform PF is in any position other than 90 degrees from the at least two pillars 7, 8.

The elevation system 1 described according to this embodiment comprises at least one mast 12 connecting the transverse elements 6 with the ball joints 11, 17, where the mast 12 itself and/or a support element 16 of the mast 12 are configured in such a way that the connection of the mast 12 with the ball joints 11, 17 is eccentric with respect to the axis of rotation 15 thereof, and where the at least one mast 12 connecting the transverse elements 6 with the ball joints 11, 17 comprises a connection means with the ball joints 11, 17 spacing apart the mast 12 from the axis of rotation 15 of the ball joints 11, 17, selected among such as a plate 13, a bend or a curvature of the mast 12, and/or a support element 16.

In this elevation system 1 the support axis EA-PF of the platform PF is positioned at different heights with respect to the base area BA in each and every one of the degrees of orientation of the solar panels 2 within the range of movement of the system, except in the two opposite extreme positions.

Also, according to a possible embodiment, from a side view of the system 1 the platform PF is the component whose horizontal extension is the maximum with respect to any other components of the system that are below the line defined by the platform PF in any of its positions.

At least one of the at least two pillars 7, 8 comprises an inner capsule 7-1, 8-1.

The elevation system 1 according to a possible embodiment comprises an electronic control device 9 controlled by a computer program, and may comprise an anemometer and a GPS receiver, where the electronic control device 9 is connected to at least one sensor 10 which identifies at least the angle between the solar radiation and the solar panels 2, and the computer program is configured so that the movement of the elevation system 1 is based on data relative to the path described by the sun.

The elevation system 1 according to any of the possible embodiments comprises a fixed part 1-1 and a mobile part 1-2.

Having sufficiently described the nature of the present invention, as well as the way of putting it into practice, it is not considered necessary to make its explanation more extensive in order for any expert in the field to understand its scope and the advantages derived therefrom, stating that , within its essentiality, may be implemented in other forms of realization that differ in detail from that indicated by way of example, and which will also achieve the protection that is sought provided that its fundamental principles are not altered, changed or modified.

## Claims

1. Elevation system for photovoltaic modules (1) comprising
- a platform (PF) consisting of transverse elements (6), which has a back side (BS), and a front side (FS) whereby solar panels (2) are connected to the transverse elements (6);
- solar panels (2) are adjacent to each other, inclined towards the sun, and arranged in one or more rows (3,4) by means of support elements (5a, 5b);
- whereby the supporting elements (5a, 5b) are attached to at least one pillar (7) comprising actuating means, and at least one supporting and accompanying pillar (8);
- whereby the pillars (7, 8) are anchored to a base area (BA) or floor of the elevation system (1),
- at least one mean (14) to move the platform (PF) in the direction of the sun is connected to the back side (BS) of the platform (PF),
- whereby the platform (PF) has a support axis (EA-PF),
- whereby the at least two pillars (7, 8) each comprise a ball joint (11, 17), which have a rotation axis (15)
**characterized in that**
- the at least two pillars (7, 8) are connected to the back side (BS) of the platform (PF) at a distance below the platform support axis (EA-PF).

2. Elevation system (1) according to claim 1, **characterized in that** the support axis (EA-PF) of the platform (PF) is at a distance above the axis of rotation (15) of the ball joints (11, 17).

3. Elevation system (1) according to any of the preceding claims, **characterized in that** from a side view of the system the platform support axis (EA-PF) is vertically aligned with the at least two pillars (7, 8) and with the axis of rotation (15) of the ball joints (11, 17) only when the platform (PF) is at 90 degrees of the at least two pillars (7, 8).

4. Elevation system (1) according to any of the preceding claims, **characterized in that**, from a side view of the system the platform support axis (EA-PF) is laterally displaced from the vertical line of at least two pillars (7, 8) and the axis of rotation (15) of the ball joints (11, 17) when the platform (PF) it is in any position other than at 90 degrees of the at least two pillars (7, 8).

5. Elevation system (1) according to any of the preceding claims, **characterized in that** it comprises at least one mast (12) connecting the transverse elements (6) with the ball joints (11, 17), whereby the mast (12) and/or a support element (16) of the mast (12) are configured in such a way that the connection of the mast (12) with the ball joints (11, 17) is eccentric with respect to the axis of rotation (15) thereof.

6. Elevation system (1) according to the preceding claim, **characterized in that** the at least one mast (12) connecting the transverse elements (6) with the ball joints (11, 17) comprises a connection mean with the ball joints (11, 17), selected among a plate (13), a bend or a curvature of the mast (12), and/or a support element (16), whereby the mast (12) is separated at a distance from the axis of rotation (15) of the ball joints (11, 17).

7. Elevation system (1) according to any of the preceding claims, **characterized in that** the support axis (EA-PF) of the platform (PF) is positioned at different heights with respect to the base area (BA) in each and every one of the degrees of orientation of the solar panels (2) within the range of movement of the system, except in the two opposite extreme positions.

8. Elevation system (1) according to any of the preceding claims, **characterized in that** from a side view of the system the platform (PF) is the component whose horizontal extension is the maximum with respect to any other components of the system that are below the line defined by the platform (PF) in any of its positions.

9. Elevation system (1) according to any of the preceding claims, **characterized in that** at least one of the at least two pillars (7, 8) comprises an inner capsule (7-1, 8-1).

10. Elevation system (1) according to any of the preceding claims, **characterized in that** it comprises an electronic control device (9) controlled by a computer program.

11. Elevation system (1) according to claim 10, **characterized in that** it comprises an anemometer and a GPS receiver.

12. Elevation system (1) according to claims 10 or 11, **characterized in that** the electronic control device (9) is connected to at least a sensor (10) that identifies at least the angle between the solar radiation and the solar panels (2).

13. Elevation system (1) according to claims 10 to 12, **characterized in that** the computer program is configured so that the movement of the elevation system (1) is based on data relative to the trajectory described by the sun.

14. Elevation system (1) according to any of the preceding claims, **characterized in that** the elevation system (1) comprises a fixed part (1-1) and a mobile part (1-2).
